# EUROPÄISCHE PATENTSCHRIFT

(11) **EP 3 455 177 B1**
(45) Veröffentlichungstag und Bekanntmachung des Hinweises auf die Patenterteilung: **13.03.2024**
(21) Anmeldenummer: 17726844.8
(22) Anmeldetag: 08.05.2017
(51) Int. Cl.: C03B 19/10

(54) **VERFAHREN ZUR HERSTELLUNG VON MIKROHOHLKUGELN AUS GLAS**
METHOD FOR PRODUCING HOLLOW GLASS MICROSPHERES
PROCÉDÉ DE FABRICATION DE MICROSPHÈRES CREUSES EN VERRE

(30) Priorität: 11.05.2016 DE 102016208141
(43) Veröffentlichungstag der Anmeldung: 20.03.2019
(73) Patentinhaber: M. Swarovski Gesellschaft m.b.H., 3363 Neufurth (AT)
(72) Erfinder: WEINBERGER, Karl, 94253 Bischofsmais (DE); NEIDHARDT, Wolfram, 91161 Hilpoltstein (DE)
(74) Vertreter: Rau, Schneck & Hübner Patentanwälte Rechtsanwälte PartGmbB
(86) Internationale Anmeldenummer: PCT/EP2017/060961
(87) Internationale Veröffentlichungsnummer: WO 2017/194485

(56) Entgegenhaltungen:
- EP-A1- 0 207 668
- EP-A2- 0 678 482
- EP-A2- 2 022 768
- WO-A1-2011/086024
- CN-A- 104 891 813
- DE-A1- 2 156 303
- DE-A1-102010 034 083
- US-A- 2 978 340
- US-A- 3 354 024
- US-A- 3 532 480

## Beschreibung

Die Erfindung bezieht sich auf ein Verfahren zur Herstellung von Mikrohohlkugeln aus Glas.

Mikrohohlkugeln aus Glas, also sphärische im Wesentlichen monozellulär expandierte Partikel mit einer einen Hohlraum umschließenden Glaswand und typischen Durchmessern im Sub-Millimeterbereich (ca. 1 bis 1.000 Mikrometer) werden vielfach als Leichtzuschlagstoffe in Kompositmaterialien und Leichtbeton eingesetzt. Des Weiteren finden diese - auch als "(glass) microspheres" bezeichneten - Mikrohohlkugeln unter anderem Verwendung in der Medizin sowie der Verbrauchsgüterindustrie.

Ein Verfahren zur Herstellung solcher Mikrohohlkugeln ist beispielsweise aus US 3,230,064 A bekannt. Danach ist zur Herstellung der Mikrohohlkugeln ein Vertikalofen (im Folgenden auch als "Schachtofen" bezeichnet) vorgesehen, in dessen Brennkammer mittels eines Brenners eine aufwärts gerichtete heiße Gasströmung erzeugt wird. In die Brennkammer dieses Vertikalofens wird ein Brenngut eingebracht, das aus mit einem Treibmittel versetzten Mikropartikeln besteht. In der hei-ßen Gasströmung werden die Mikropartikel aufgeschmolzen. Des Weiteren wird durch das Treibmittel in den aufgeschmolzenen Mikropartikeln Gas erzeugt, durch welches die Mikropartikel zu den gewünschten Mikrohohlkugeln aufgebläht (expandiert) werden. Aufgrund ihrer erniedrigten Dichte schwimmen die Mikrohohlkugeln in der Gasströmung auf und werden zusammen mit der Gasströmung durch einen am oberen Ende des Vertikalofens angeordneten Gasauslass aus der Brennkammer ausgetragen. Die ausgetragenen Mikrohohlkugeln werden in einem dem Vertikalofen nachgeschalteten Zyklon-Abscheider oder einem Sackfilter von der Gasströmung getrennt.

Verfahren zur Herstellung von multizellulär expandierten Schaumglaspartikeln sind ferner aus DE 2 156 303 A, EP 0 207 668 A1, WO 2011/086024 A1, DE 10 2010 034 083 A1, US 3 532 480 A und US 3 354 024 A bekannt.

In der CN 104 891 813 A wird ein Verfahren zur Herstellung von hohlen Glasmikroperlen beschrieben, bei dem Glasbruch, Feldspat, Wasserglas und weitere Komponenten zusammen mit Wasser vermischt, aus der Paste Partikel hergestellt und diese im Ofen erhitzt werden.

Ein großes, zu bewältigendes Problem bei der Herstellung von Mikrohohlkugeln ist die Klebeneigung der während des Brennprozesses an- oder aufgeschmolzenen Partikel, die einerseits zur Agglomeration (Verbackung) der Partikel untereinander sowie anderseits zum Verkleben der Partikel mit der Ofeninnenwand führt. Dieses Problem ist in der Regel umso schwieriger zu beherrschen, je höher die Brenntemperaturen und je kleiner die Partikelgrößen der expandierten Partikel sind.

Um das Verkleben der Partikel miteinander und mit der Ofenwand zu vermeiden, wird dem Brenngut häufig ein Trennmittel zugemischt. Gegenwärtig werden als Trennmittel für die Herstellung von Mikrohohlkugeln vor allem Kaolin oder Metakaolin, Kalksteinmehl, Talkum oder Korund verwendet. Extrem feinkörnige Partikel, wie die herzustellenden Mikrohohlkugeln, neigen jedoch trotz Verwendung dieser Trennmittel stark zur Agglomeration, so dass ein vergleichsweise hoher Aufwand betrieben werden muss, um die resultierenden Mikrohohlkugeln voneinander und von dem Trennmittel zu trennen.

Aus US 5 614 255 A ist die Wirkung von Aluminiumhydroxid als Trennmittel bei der Herstellung von Mikrohohlkugeln aus Glas grundsätzlich bekannt.

Aus DE 43 44 994 A1 ist ferner bekannt, bei der Herstellung von Blähglasgranulat zur Mischung eines zu granulierenden Gemenges aus Glaspulver, Wasserglas, Tonmehl, Polysaccharid und Wasser einen Intensivmischer in Form eines Gegenstrom-Schnellmischers nach Eirich einzusetzen.

Der Erfindung liegt die Aufgabe zugrunde, ein effektives Verfahren zur Herstellung von Mikrohohlkugeln aus Glas anzugeben.

Bezüglich des Verfahrens wird die Aufgabe erfindungsgemäß gelöst durch die Merkmale des Anspruchs 1.

Verfahrensgemäß wird zur Herstellung von Mikrohohlkugeln aus Glas eine wässrige Suspension aus Ausgangsstoffen, umfassend Glasmehl und Wasserglas angesetzt, die nachfolgend als "Ausgangs-Suspension" bezeichnet ist. Optional wird der Ausgangs-Suspension ein Blähmittel ("Treibmittel") zugegeben. Aus der Ausgangs-Suspension werden Brenngutpartikel ("Grünkorn") hergestellt, deren Durchmesser zwischen 5 Mikrometer und 300 Mikrometer, insbesondere zwischen 5 und 100 Mikrometer, liegen.

Erfindungsgemäß werden die Brenngutpartikel in einem Intensivmischer mit einem pulverförmigen Trennmittel aus Aluminiumhydroxid vermischt, bevor das Gemisch aus Brenngutpartikeln und Trennmittel in eine Brennkammer eines Ofens eingegeben wird. Als Intensivmischer wird ein Mischer bezeichnet, bei dem der Mischvorgang bei einem Leistungseintrag von mindestens etwa 2 Kilowatt pro 100 Kilogramm Mischgut durchgeführt wird, und/oder dessen Mischwerkzeug sich bei dem Mischvorgang mit einer Umfangsgeschwindigkeit von mindestens 15 Metern pro Sekunde bewegt. Bevorzugt weist der erfindungsgemäß eingesetzte Intensivmischer einen Leistungseintrag von mindestens 5 Kilowatt pro 100 Kilogramm Mischgut, insbesondere mindestens 10 Kilowatt pro 100 Kilogramm auf. Die Umfangsgeschwindigkeit des Mischwerkzeugs des erfindungsgemäß eingesetzten Intensivmischers liegt bevorzugt bei mindestens 30 Metern pro Sekunde.

In der Brennkammer, in der eine die Erweichungstemperatur des Glasmehls überschreitende Brenntemperatur herrscht, expandieren schließlich die Brenngutpartikel zu den Mikrohohlkugeln. Die Brenngutpartikel werden hierbei in einer typischen Ausprägung des Verfahrens bezüglich ihres Durchmessers um 25 % bis 70 % vergrößert bzw. expandiert (aufgebläht), wobei typischerweise bei größeren Brenngutpartikeln größere Expansionsgrade erzielt werden. Der Durchmesser der aus dem Expansionsprozess ("Blähprozess") resultierenden Mikrohohlkugeln liegt somit in typischer Dimensionierung zwischen ca. 7 und 500 Mikrometer.

Das erfindungsgemäß eingesetzte Trennmittel besteht vorzugsweise aus Aluminiumhydroxid mit einem Reinheitsgrad von mindestens 95 Masse-%, insbesondere über 99,5 Masse-%. Der Anteil an anderen Stoffen (Verunreinigungen) in dem Trennmittel liegt mit anderen Worten bei unter 5 Masse-%, vorzugsweise unter 0,5 Masse-%. In einer bevorzugten Ausführungsform liegt das pulverförmige Trennmittel aus Aluminiumhydroxid des Weiteren mit einer Feinheit von D₉₀ ≤35 µm (Mikrometer), insbesondere D₉₀ ≤ 5 µm, vorzugsweise D₉₀ ≤ 3,5 µm vor. Das bedeutet, dass 90% der Pulverkörner einen Durchmesser aufweisen, der kleiner oder gleich 35 µm, insbesondere kleiner oder gleich 5 µm, vorzugsweise kleiner oder gleich 3,5 µm ist. Als Trennmittel wird beispielsweise das kommerziell erhältliche Flammschutzmittel Apyral 40CD der Firma Nabaltec herangezogen, das den vorstehenden Angaben zum Reinheitsgrad und zur Feinheit genügt.

Überraschenderweise wurde in Experimenten festgestellt, dass sich durch das vorstehend beschriebene Verfahren, also bei Verwendung von Aluminiumhydroxid als Trennmittel und bei Intensivmischung des Trennmittels mit den Brenngutpartikeln vor dem Brennprozess, bei der Herstellung von Glas-Mikrohohlkugeln im Vergleich zu herkömmlichen Verfahren eine wesentlich verbesserte Trennwirkung erzielen lässt. Dabei hat sich insbesondere gezeigt, dass die verbesserte Trennwirkung selektiv für die Verwendung von Aluminiumhydroxid in Kombination mit der Intensivmischung ist. Mit anderen Trennmitteln oder ohne die Intensivmischung wird die verbesserte Trennwirkung nicht oder nur in wesentlich geringerem Maße beobachtet. Ein wesentlicher Vorteil des Verfahrens liegt weiterhin darin, dass durch die Intensivmischung nur vergleichsweise wenig Trennmittel benötigt wird. Außerdem wurde überraschenderweise festgestellt, dass die Verwendung von Aluminiumhydroxid als Trennmittel die Bildung von Hohlkugeln fördert.

Die nach dem erfindungsgemäßen Verfahren hergestellten Mikrohohlkugeln weisen in typischer Ausprägung einen zentralen kugelförmigen Hohlraum auf, der von einer Hohlkugelwand umgeben ist. Die verfahrensgemäß hergestellten Mikrohohlkugeln weisen typischerweise eine raue Oberfläche auf. Die raue Oberfläche ist hierbei insbesondere für die Verwendung der Mikrohohlkugeln als Leichtzuschlagstoff in einem Verbundwerkstoff von Vorteil, da hierdurch eine besonders starke Bindung zwischen den Mikrohohlkugeln und dem umgebenden Matrixmaterial erzielt wird. Weiterhin sind - insbesondere bei größeren Mikrohohlkugeln - häufig in der Hohlkugelwand eine Vielzahl von Bläschen eingelagert, deren Durchmesser den Durchmesser des zentralen Hohlvolumens allerdings um ein Vielfaches (insbesondere um mindestens einen Faktor 10) unterschreiten.

Ein besonderer Vorteil der Verwendung von Aluminiumhydroxid als Trennmittel und der Intensivmischung des Trennmittels mit dem Brenngut besteht darin, dass hierdurch die Herstellung der Mikrohohlkugeln in einem Drehrohrofen verfahrenstechnisch beherrschbar wird, da der hier typischerweise besonders stark auftretenden Klebeneigung der Partikel beim Brennprozess effektiv entgegengewirkt wird. Entsprechend wird in einer bevorzugten Ausführung des Verfahrens für den Expansionsprozess ein Drehrohrofen herangezogen. Bei dem Drehrohrofen handelt es sich insbesondere um einen durch Beflammung indirekt (also von außen) beheizten Drehrohrofen. Die Wärmezufuhr in die Brennkammer des Drehrohrofens erfolgt hierbei somit von außen über die Mantelfläche des Drehrohrs. Die Brenntemperatur in der Brennkammer des Drehrohrofens ist bei dieser Verfahrensvariante in zweckmäßiger Dimensionierung auf einen Wert zwischen 700°C und 1150°C eingestellt.

In einer alternativen Ausführungsform wird der Expansionsprozess in einem Schachtofen (Vertikalofen) durchgeführt, bei dem in einer länglichen, in der Längsausdehnung in etwa vertikal ausgerichteten Brennkammer eine Heißgasströmung geführt ist, in der der Expansionsprozess stattfindet. Die Brenntemperatur in der Brennkammer liegt bei dieser Ausführung des Verfahrens vorzugsweise zwischen 700°C und 1400°C.

Das Herstellen der Brenngutpartikel erfolgt bevorzugt durch Sprühtrocknen der Ausgangs-Suspension, da hierbei vorteilhafterweise eine besonders enge Korngrößenverteilung (Partikelgrößenverteilung) bei besonders hoher Qualität hinsichtlich der Sphärizität der Brenngutpartikel erzielt wird. Insbesondere die Herstellung von Brenngutpartikeln mit den gewünschten extrem kleinen Durchmessern zwischen 5 Mikrometern und 100 Mikrometern ist hier vorteilhafterweise gut zu bewerkstelligen. Alternativ werden die Brenngutpartikel durch Granulieren mittels eines Granuliertellers und anschließendem Trocknen hergestellt. Wiederum alternativ wird die Ausgangs-Suspension zu einem Vorgranulat kompaktiert, das getrocknet und zu den Brenngutpartikeln der gewünschten Größe zerkleinert wird.

Zweckmäßigerweise wird das Glasmehl, das zur Herstellung der Ausgangs-Suspension verwendet wird, auf eine Feinheit von D₉₇ ≤ 47 µm zermahlen. Das bedeutet, dass 97% der gemahlenen Glaskörner einen Durchmesser haben, der kleiner oder gleich 47 µm ist. Zur Herstellung der besonders kleinen Brenngutpartikel (beispielsweise für Brenngutpartikel kleiner 50 µm) wird vorzugsweise besonders feines Glasmehl mit einem D₉₇-Wert von 35 µm verwendet. Das eingesetzte Glasmehl liegt dabei jeweils mit einer bestimmten Partikelgrößenverteilung vor, so dass auch die aus dem Glasmehl gefertigten Brenngutpartikel einer Größenverteilung unterliegen.

Vorzugsweise wird das Gemenge aus Brenngutpartikeln und Trennmittel vor dem Einbringen in die Brennkammer für eine Mischdauer von 10 Sekunden bis 10 Minuten, insbesondere für ca. 5 Minuten intensiv gemischt.

Ein vorteilhaftes Mischungsverhältnis von Trennmittel und Brenngutpartikeln liegt bei einem Anteil von 5% bis 25%, insbesondere 17% der Masse des Trennmittels bezogen auf die Gesamtmasse der Mischung.

In einer bevorzugten Ausführungsform wird zum Mischen der Brenngutpartikel mit dem Trennmittel ein Intensivmischer nach Eirich verwendet. Ein Intensivmischer nach Eirich umfasst einen schräg stehenden, rotierenden Mischbehälter, in dem ein exzentrisch angeordneter Rührer das Mischgut gegenläufig zur Drehrichtung des Rührbehälters rührt, wodurch eine besonders hohe Mischqualität erzielt wird. Prinzipiell ist es im Rahmen der Erfindung jedoch auch möglich, das Verfahren mit einem "liegenden" Pflugscharmischer nach Lödige oder mit einem durch einen konischen Mischbehälter gekennzeichneten Mischer nach Ekato durchzuführen.

### Eine (nicht beanspruchte)

Anlage zur Herstellung von Mikrohohlkugeln aus Glas umfasst einen Ofen mit einer Brennkammer. Weiterhin umfasst die Anlage einen Intensivmischer, vorzugsweise einen Intensivmischer nach Eirich. Der Intensivmischer ist dazu eingerichtet, ein pulverförmiges Trennmittel aus Aluminiumhydroxid mit Brenngutpartikeln zu vermischen, die aus einer wässrigen Suspension aus Ausgangsstoffen umfassend Glasmehl und Wasserglas, sowie optional ein Blähmittel, hergestellt sind, wobei die Brenngutpartikel Durchmesser aufweisen, die zwischen 5 Mikrometer und 300 Mikrometer, insbesondere zwischen 5 Mikrometer und 100 Mikrometer, liegen. Die Anlage umfasst hierzu vorzugsweise Zuleitungen, über die dem Intensivmischer die oben genannten Komponenten (d.h. das Trennmittel und die Brenngutpartikel) zugeführt sind. Das Trennmittel und die Brenngutpartikel sind dem Intensivmischer beispielsweise separat voneinander zugeführt. Alternativ hierzu ist als Zuleitung eine Mischrinne vorgesehen, über die dem Intensivmischer ein Vor-Gemisch aus Brenngutpartikeln und Trennmittel zugeführt ist.

Schließlich umfasst die Anlage eine Beschickungseinrichtung mittels derer die Brennkammer des Ofens mit dem Gemisch aus Brenngutpartikeln und Trennmittel beschickbar ist, wobei in der Brennkammer eine die Erweichungstemperatur des Glasmehls überschreitende Brenntemperatur erzeugbar ist, bei der die Brenngutpartikel zu den Mikrohohlkugeln expandieren.

Der Ofen der Anlage ist vorzugsweise durch einen Drehrohrofen gebildet, dessen Brennkammer insbesondere indirekt beheizt ist. In einer alternativen Ausführungsform ist der Ofen der Anlage durch einen Schachtofen gebildet.

Nachfolgend werden Ausführungsbeispiele der Erfindung anhand einer Zeichnung näher erläutert. Darin zeigen:
- Fig. 1: in grob schematisch vereinfachter Darstellung eine Anlage zur Herstellung von Mikrohohlkugeln aus Glas mit einem Intensivmischer zur Vermischung von Brenngutpartikeln mit einem pulverförmigen Trennmittel aus Aluminiumhydroxid, sowie mit einem als Drehrohrofen ausgeführten Brennofen, in den das Gemisch aus Brenngutpartikeln und Trennmittel eingebracht wird, so dass die Brenngutpartikel zu den gewünschten Mikrohohlkugeln expandiert werden,
- Fig. 2: in Darstellung gemäß Fig. 1 eine alternative Anlage, in der der Brennofen als Schachtofen ausgeführt ist, und
- Fig. 3 bis Fig. 5: mikroskopische Aufnahmen von Mikrohohlkugeln, die nach dem erfindungsgemäßen Verfahren hergestellt sind.

Einander entsprechende Teile und Strukturen sind in allen Figuren stets mit gleichen Bezugszeichen versehen.

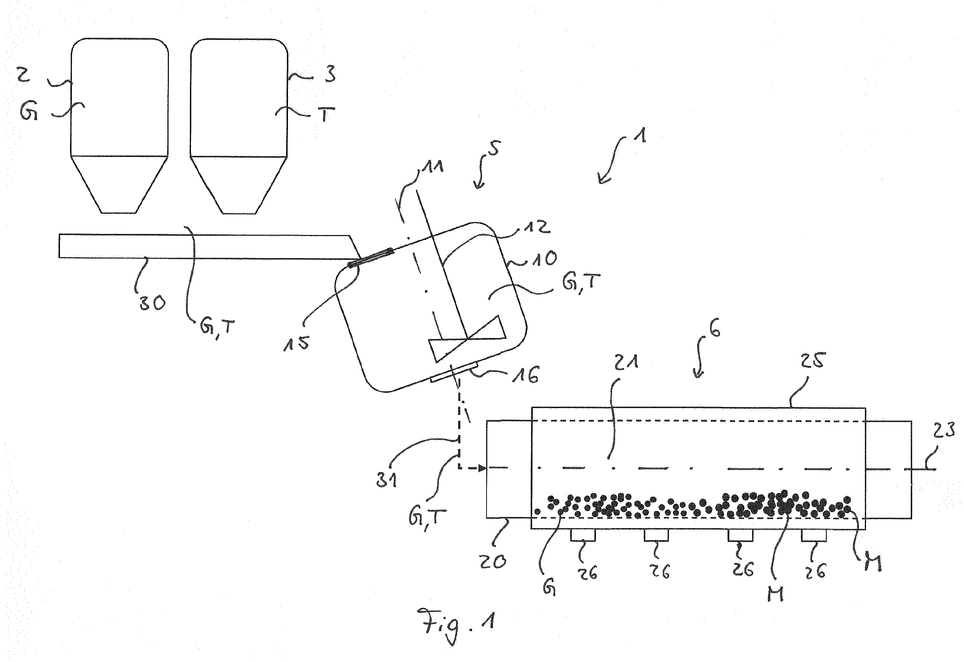

Fig. 1 zeigt eine Anlage 1 zur Herstellung von Mikrohohlkugeln M aus Glas, d.h. zur Herstellung von hohlen Glaskugeln, deren typische Durchmesser in einem Bereich zwischen 7 und 500 Mikrometern liegen.

Die Anlage 1 umfasst einen ersten Silo 2 als Vorlagebehälter für Brenngutpartikel G, sowie einen zweiten Silo 3 als Vorlagebehälter für pulverförmiges Trennmittel T aus Aluminiumhydroxid (Al(OH)₃). Weiterhin umfasst die Anlage 1 einen Intensivmischer 5 zur Vermischung der Brenngutpartikel G mit dem Trennmittel T, sowie einen als Drehrohrofen 6 ausgeführten Brennofen zur Expansion der Brenngutpartikel G zu den gewünschten Mikrohohlkugeln M.

Bei den in dem ersten Silo 2 gelagerten Brenngutpartikeln G handelt es sich um annähernd kugelförmige Partikel, deren Durchmesser im Bereich zwischen 5 Mikrometer und 300 Mikrometer liegen. Die Brenngutpartikel G sind hier durch einen Sprühtrocknungsprozess hergestellt. Hierzu werden als Ausgangsstoffe (Alt-)Glasmehl, Wasserglas und ein Blähmittel mit Wasser zu einer Suspension (Schlicker) angesetzt.

Zur Herstellung einer unteren Fraktion der Brenngutpartikel G (d.h. zur Herstellung von Brenngutpartikeln G mit tendenziell kleineren Durchmessern) wurde in Versuchen für den Ansatz ein besonders feines Glasmehl verendet, das beispielsweise mit einer Partikelgrößenverteilung vorliegt, die durch folgende D-Werte gekennzeichnet ist: D₁₀ = 2,274 µm, D₅₀ = 9,342 µm, D₉₀ = 24,13 µm und D₉₇ = 34,95 µm, wobei für jeden D-Wert volumenmäßig jeweils 10, 50, 90 bzw. 97 % der Partikel einen Durchmesser aufweisen, der kleiner oder gleich dem jeweils angegebenen Wert ist. Ein versuchsweise zur Herstellung einer oberen Fraktion der Brenngutpartikel G (zur Herstellung von tendenziell größeren Brenngutpartikeln G) eingesetztes Glasmehl war durch folgende D-Werte gekennzeichnet: D₁₀ = 3,195 µm, D₅₀ = 14,44 µm, D₉₀ = 35,63 µm und D₉₇ = 46,60 µm. Die vorstehenden Partikelgrößenverteilungen wurden jeweils durch Vermessen einer Stichprobe des jeweiligen Glasmehls mit einem Partikelgrößenmessgerät der Fa. Beckman Coulter bestimmt.

Die Suspension wird in einem Sprühturm zu den Brenngutpartikeln G mit den gewünschten Durchmessern partikuliert und getrocknet. Optional erfolgt nach dem Sprühprozess noch eine Klassierung, wobei die Fraktion mit den gewünschten Durchmessern ausgewählt und dem Silo 2 zugeführt wird. Die Brenngutpartikel G können jedoch auch auf andere Weise hergestellt sein, etwa mit Hilfe eines Granuliertellers und anschließender Trocknung des Granulats oder mit Hilfe einer Kompaktiervorrichtung, wobei das entstehende Granulat nach der Trocknung auf die gewünschte Größe zerstoßen wird. Auch in den alternativen Ausführungsformen ist typischerweise ein nachgeschalteter Klassierschritt vorgesehen.

Bei dem in dem zweiten Silo 3 gelagerten Trennmittel T handelt es sich beispielsweise um das als Flammschutzmittel vertriebene pulverförmige Produkt Apyral 40CD der Firma Nabaltec. Das Trennmittel T zeichnet sich durch einen Aluminiumhydroxid-Gehalt von 99,5 % aus. Die Partikelgrößenverteilung des Pulvers ist durch die Werte D₁₀ = 0,6 Mikrometer, D₅₀ = 1,3 Mikrometer und D₉₀ = 3,2 Mikrometer charakterisiert.

Der Intensivmischer 5 ist als ein Intensivmischer nach Eirich ausgeführt. Der Intensivmischer 5 umfasst einen im Wesentlichen becherförmigen Mischbehälter 10, der um seine gegenüber der Vertikalen schräg stehende Längsachse 11 rotierbar gelagert ist. Ein gegenläufig zu dem Mischbehälter 10 rotierbares Mischwerkzeug 12 ist parallel zur Längsachse 11 exzentrisch in dem Mischbehälter 10 angeordnet. Der Mischbehälter 10 ist über eine verschließbare Deckelöffnung 15 beschickbar und über eine ebenfalls verschließbare zentral angeordnete Bodenöffnung 16 entleerbar. Es wird beispielsweise ein Intensivmischer nach Eirich eingesetzt, der einen Leistungseintrag von 10 bis 20 Kilowatt pro 100 kg Mischgut (vorzugsweise etwa 15 Kilowatt pro 100 kg Mischgut) und eine Umfangsgeschwindigkeit an der äußersten Stelle des Rührwerkzeugs von mindestens 30 Metern pro Sekunde aufweist.

Der Drehrohrofen 6 umfasst in herkömmlicher Weise ein lang ausgedehntes hohlzylindrisches Drehrohr 20 aus hochtemperaturfestem Stahl, in dessen Innenraum eine Brennkammer 21 ausgebildet ist. Das Drehrohr 20 ist um seine gegenüber der Horizontalen leicht geneigt angeordnete Längsachse 23 rotierbar gelagert. Das Drehrohr 6 ist größtenteils von einer feststehenden Ummantelung 25 eingehaust, so dass zwischen dem Drehrohr 20 und der Ummantelung 25 ein Ringspalt gebildet ist. Der Ringspalt ist mittels mehrerer, über die Länge des Drehrohrs 20 verteilt angeordneter gasbetriebener Brenner 26 befeuert, so dass die Brennkammer 21 über die Mantelfläche des Drehrohres 20 indirekt beheizt wird.

Im Betrieb der Anlage 1 werden aus den beiden Silos 2,3 Brenngutpartikel G und Trennmittel T auf eine unterhalb der Silos 2,3 angeordnete Mischrinne 30 dosiert, so dass dort ein Vor-Gemisch aus Brenngutpartikeln G und Trennmittel T mit einem Trennmittel-Anteil von 10 Massen-% vorliegt. Die Einstellung des gewünschten Massenverhältnisses kann beispielsweise mittels einer Waage erfolgen, es ist jedoch ebenso möglich, dass die Einstellung volumetrisch beispielsweise mittels den Silos 2,3 zugeordneter Zellenradschleusen oder Förderschnecken erfolgt. Über die Mischrinne 30 wird das Vor-Gemisch aus Brenngutpartikeln G und Trennmittel T in den Mischbehälter 10 des Intensivmischers 5 gefördert.

Alternativ zu der beispielhaften Darstellung kann die Mischrinne 30 auch entfallen, wobei in diesem Fall Brenngutpartikel G und Trennmittel T jeweils separat in den Intensivmischer 5 dosiert werden, so dass dort das gewünschte Mischungsverhältnis erzeugt wird.

Der Mischvorgang erfolgt satzweise, wobei jeweils eine Charge des Vor-Gemischs einem Mischvorgang unterzogen wird. Das Vor-Gemisch aus Trennmittel T und Brenngutpartikel G wird für eine Mischdauer von 5 Minuten in dem Intensivmischer 5 homogenisiert. Nach Abschluss des Mischvorgangs wird das Gemisch aus Brenngutpartikeln G und Trennmittel T über die Bodenöffnung 16 aus dem Mischbehälter 10 ausgetragen. Das Gemisch wird in einem dem Intensivmischer 5 und dem Drehrohrofen 6 zwischengeschalteten Pufferbehälter gespeichert (nicht explizit dargestellt).

Aus dem Pufferbehälter wird das Gemisch aus Brenngutpartikeln G und Trennmittel T kontinuierlich mittels einer hier nicht explizit dargestellten Beschickungseinrichtung der Brennkammer 21 des Drehrohrofens 6 zugeführt (angedeutet durch einen Pfeil 31). In der Brennkammer 21 wird bei Betrieb der Anlage 1 mittels der Brenner 26 eine die Erweichungstemperatur des Glasmehls überschreitende Brenntemperatur von beispielsweise 960°C erzeugt, bei der die Brenngutpartikel G in einem Zeitraum von etwa 4 bis 10 Minuten sukzessive zu den gewünschten Mikrohohlkugeln M aufblähen. Die erzeugten Mikrohohlkugeln M werden aus der Brennkammer 21 ausgetragen und nach einem Kühl- und Sortierschritt einem Produktreservoir zugeführt (hier nicht dargestellt). Das Trennmittel T wird durch Sieben oder Windsichten von den Mikrohohlkugeln M getrennt. Das bei dem Brennprozess zu Aluminiumoxid (Al₂O₃, Korund) oxidierte Trennmittel wird optional teilweise weiterverwendet, wobei das Trennmittel dann insbesondere in herkömmlicher Weise zu Beginn des Brennprozesses den Brenngutpartikeln G zugemischt wird. Des Weiteren werden die Mikrohohlkugeln M, wiederum durch Sieben oder Windsichten, von multizellulär (schaumartig) expandierten Partikeln (also Partikeln mit mehreren Hohlräumen) getrennt, die bei dem Brennprozess in geringem Umfang neben den Mikrohohlkugeln M entstehen. Diese multizellulär expandierten Partikel werden entweder als Schlechtteile verworfen oder einer anderweitigen Verwendung zugeführt.

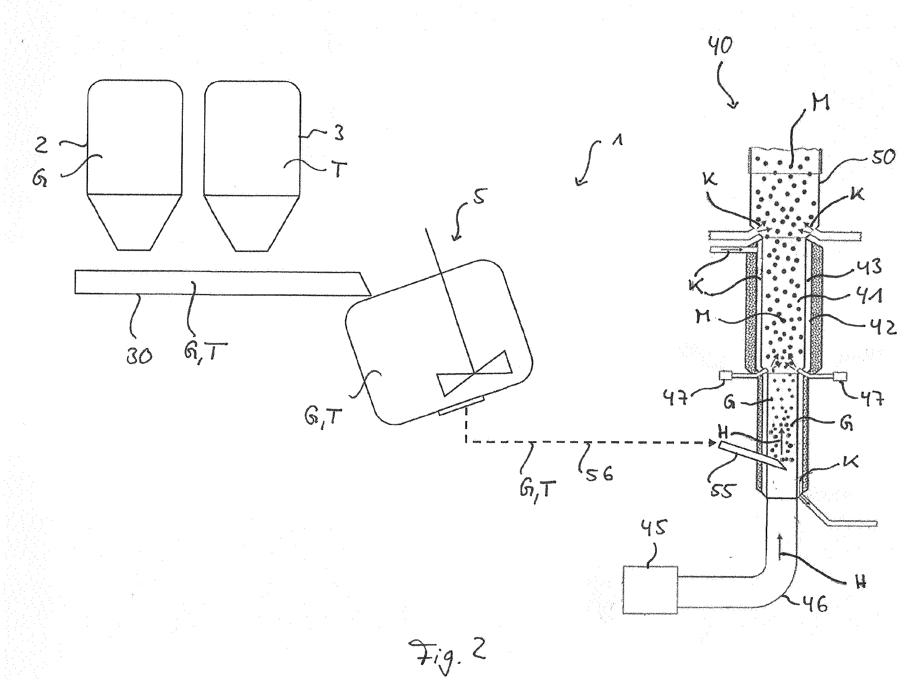

Fig. 2 zeigt eine alternative Ausführungsform der Anlage 1. Im Unterschied zur ersten Ausführungsform wird hier der Expansionsprozess nicht in einem Drehrohrofen durchgeführt, sondern in einem Schachtofen 40.

Der Schachtofen 40 umfasst eine schachtartig langgestreckte, hinsichtlich der Längserstreckung vertikal ausgerichtete Brennkammer 41, die von einem nach au-ßen hin thermisch isolierten Doppelmantel 42 aus Stahl umgeben ist. In einem durch den Doppelmantel 42 gebildeten Kühlspalt 43 ist Kühlluft K geführt. Nach oben hin ist die Brennkammer 41 stufenartig erweitert.

Dem Schachtofen 40 ist ein gasbetriebener Brenner 45 zugeordnet, der dazu dient, in der Brennkammer 41 einen von unten nach oben gerichteten Heißgasstrom H zu erzeugen. Hierzu wird das durch den Brenner 45 erzeugte Heißgas über eine Heißgasleitung 46 der Brennkammer 41 als Heißgasstrom H zugeführt. Etwa auf halber Höhe der Brennkammer 41, nämlich in dem Bereich der vorstehend beschriebenen Querschnittserweiterung, ist eine Anzahl von (beispielsweise sechs) zusätzlichen, gasbetriebenen Brennern 47 angeordnet, die kranzartig um den Umfang der Brennkammer 41 verteilt positioniert sind.

Oberhalb der Brennkammer 41 schließt gemäß Fig. 2 ein Bereich an, der als Kühlfalle 50 dient und der einen gegenüber dem Querschnitt des oberen Abschnitts der Brennkammer 41 nochmals erweiterten Querschnitt aufweist. Alternativ können die Brennkammer 41 sowie die optional vorgesehene Kühlfalle 50 über die gesamte Höhe mit einem einheitlichen Querschnitt ausgeführt sein.

Schließlich umfasst der Schachtofen 40 eine Beschickungseinrichtung, die hier durch eine Brenngutleitung 55 gebildet ist. Die Brenngutleitung 55 ist durch den Doppelmantel 42 hindurch geführt und mündet in den unteren Abschnitt der Brennkammer 41. Die Brenngutleitung 55 ist aus dem dem Intensivmischer 5 nachgeschalteten Pufferbehälter gespeist (angedeutet durch den Pfeil 56). Die Brenngutleitung 55 verläuft insbesondere in Beschickungsrichtung fallend, so dass das Brenngut ohne aktive Förderung (lediglich unter Wirkung der Schwerkraft) in die Brennkammer 41 rutscht. Optional kann die Beschickungseinrichtung allerdings auch Mittel zur aktiven Förderung des Brennguts umfassen, z.B. ein Druckluftsystem oder eine Förderschnecke.

Im Betrieb der Anlage 1 wird in dem vorliegenden Ausführungsbeispiel das homogene Gemisch aus Brenngutpartikeln G und Trennmittel T mittels der Brenngutleitung 55 kontinuierlich in die Brennkammer 41 gefördert, wo sie von dem Heißgasstrom H erfasst und nach oben getragen werden.

Dabei wird in dem unteren Abschnitt der Brennkammer 41 eine Temperatur von beispielsweise etwa 650 °C erzeugt, bei der die Brenngutpartikel G zunächst vorgewärmt werden. Durch die Brenner 47 wird die Brennkammer 41 zusätzlich beheizt, so dass die Temperatur im oberen Abschnitt der Brennkammer 41 auf die die Erweichungstemperatur des Glasmehls überschreitende Brenntemperatur erhöht wird. Die Expansion der Brenngutpartikel G zu den Mikrohohlkugeln M erfolgt hier im kurzzeitigen Flammenkontakt bei ca. 1400 °C.

Die expandierten Mikrohohlkugeln M werden schließlich der Kühlfalle 50 zugeführt und dort durch Zufuhr von Kühlluft K abgeschreckt. Schließlich werden die Mikrohohlkugeln M über einen Feststoffabscheider von dem Heißgasstrom abgetrennt und gegebenenfalls nach einem Sortierschritt einem Produktreservoir zugeführt (hier wiederum nicht dargestellt). Das mit ausgetragene Trennmittel T sowie etwaige Schlechtteile (insbesondere multizellulär expandierte Partikel), werden mittels eines Zyklons wiederum von den Mikrohohlkugeln M getrennt.

Versuche haben ergeben, dass die im Vergleich zu herkömmlichen Verfahren wesentlich verbesserte Trennwirkung sowohl auf die Verwendung von Aluminiumhydroxid als Trennmittel T als auch auf die Intensivmischung der Brenngutpartikel G mit dem Trennmittel T zurückzuführen ist, und insbesondere nur durch die Kombination beider Verfahrensmerkmale erzielt wird.

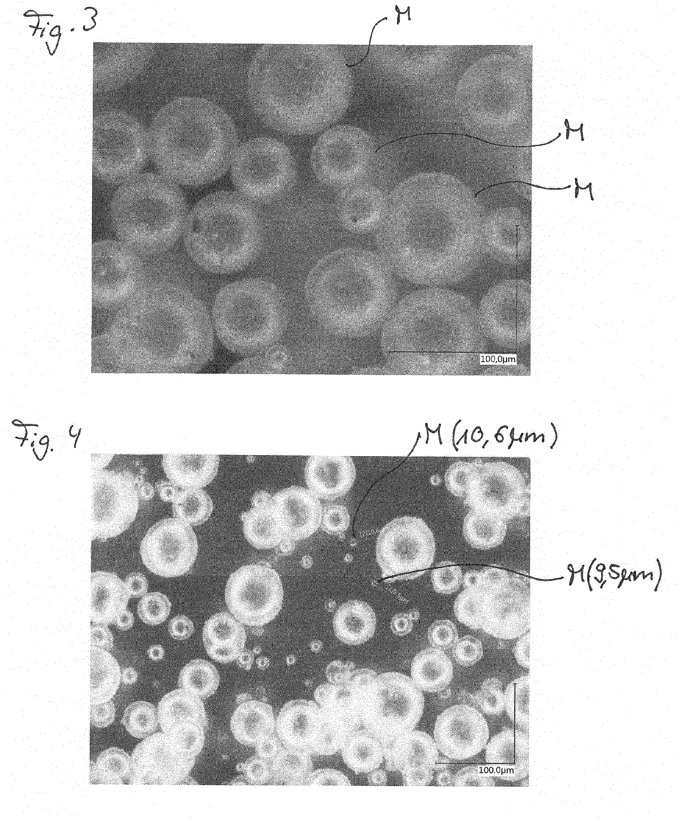

In den Fig. 3 bis 5 sind jeweils Mikroskopaufnahmen von erfindungsgemäß hergestellten Mikrohohlkugeln M in unterschiedlichen Vergrößerungen dargestellt. Die jeweilige Vergrößerung ist aus dem jeweils in der Figur unten rechts eingezeichneten Maßstab erkennbar. Diese Mikrohohlkugeln M wurden in einer Anlage 1 gemäß Fig. 1 hergestellt, wobei als Intensivmischer 5 ein Intensivmischer nach Eirich im Technikumsmaßstab herangezogen wurde. Der Mischvorgang erfolgte dabei für 5 Minuten bei einer maximalen Rührergeschwindigkeit von etwa 31,4 Meter pro Sekunde - angegeben ist hierbei die Umfangsgeschwindigkeit des Mischwerkzeugs 12 an dessen größten Durchmesser - bei einer gegenläufigen Drehzahl des Mischbehälters 10 von 35 Umdrehungen pro Minute. Der Mischer wies dabei einen Leistungseintrag von 2,4 Kilowatt auf 10 Liter Mischgut auf.

Aus Fig. 3 und Fig. 4 ist insbesondere die herausragende Sphärizität der Mikrohohlkugeln M erkennbar. Weiterhin ist aus Fig. 3 und Fig. 4 ersichtlich, dass die nach dem vorgestellten Verfahren hegestellten expandierten Partikel nahezu ausschließlich als Hohlkugeln vorliegen, d.h. in Form von Kugeln bei denen ein einzelner zentraler Hohlraum von einer vergleichsweise dünnen Wand umgeben ist. Es werden so gut wie keine multizellulären Partikel erzeugt, die in ihrem Kern mehrere Hohlräume vergleichbarer Größe aufweisen. Aus Fig. 4 ist dabei ersichtlich, dass auch kleinste Partikel als Hohlkugeln vorliegen, was hier exemplarisch durch zwei bemaßte Mikrohohlkugeln M mit Durchmessern von 10,6 µm bzw. 9,5 µm gezeigt ist. Andererseits wurden mit dem vorstehenden beschriebenen Verfahren auch große Mikrohohlkugeln mit Durchmessern zwischen 300 und 500 Mikrometern erhalten.

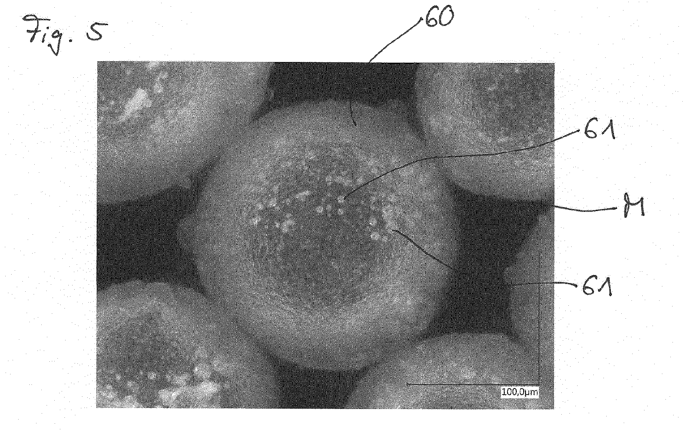

Fig. 5 zeigt die für erfindungsgemäß hergestellte Mikrohohlkugeln M typische vergleichsweise raue Oberfläche der Hohlkugelwand 60. Zudem sind in die Hohlkugelwand 60 eingeschlossene Bläschen 61 oder an die Hohlkugelwand 60 angelagerte Bläschen 61 erkennbar, deren Durchmesser den Durchmesser des zentralen Hohlraums um ein Vielfaches unterschreiten.

Die Erfindung wird an den vorstehend beschriebenen Ausführungsbeispielen besonders deutlich, ist auf diese gleichwohl aber nicht beschränkt.

### Bezugszeichenliste

- 1: Anlage
- 2: Silo
- 3: Silo
- 5: Intensivmischer
- 6: Drehrohrofen
- 10: Mischbehälter
- 11: Längsachse
- 12: Mischwerkzeug
- 15: Deckelöffnung
- 16: Bodenöffnung
- 20: Drehrohr
- 21: Brennkammer
- 23: Längsachse
- 25: Ummantelung
- 26: Brenner
- 30: Mischrinne
- 31: Pfeil
- 40: Schachtofen
- 41: Brennkammer
- 42: Doppelmantel
- 43: Kühlspalt
- 45: Brenner
- 46: Heißgasleitung
- 47: Brenner
- 50: Kühlfalle
- 55: Brenngutleitung
- 56: Pfeil
- 60: Hohlkugelwand
- 61: Bläschen

- G: Brenngutpartikel
- H: Heißgasstrom
- K: Kühlluft
- M: Mikrohohlkugeln
- T: Trennmittel

## Patentansprüche

1. Verfahren zur Herstellung von Mikrohohlkugeln (M) aus Glas
- wobei eine wässrige Suspension aus Ausgangsstoffen, umfassend Glasmehl und Wasserglas angesetzt wird,
- wobei aus der Suspension Brenngutpartikel (G) hergestellt werden, deren Durchmesser zwischen 5 Mikrometer und 300 Mikrometer, insbesondere zwischen 5 Mikrometer und 100 Mikrometer liegen,
- wobei die Brenngutpartikel (G) mit einem pulverförmigen Trennmittel (T) aus Aluminiumhydroxid in einem Intensivmischer (5) vermischt werden, wobei
= der Mischvorgang bei einem Leistungseintrag von mindestens 2 Kilowatt, insbesondere mindestens 5 Kilowatt, pro 100 Kilogramm Mischgut durchgeführt wird und/oder
= ein Mischwerkzeug des Intensivmischer (5) sich bei dem Mischvorgang mit einer Umfangsgeschwindigkeit von mindestens 15 Metern, insbesondere mindestens 30 Metern, pro Sekunde bewegt,
- wobei anschließend das Gemisch aus Brenngutpartikeln (G) und Trennmittel (T) in eine Brennkammer (21, 41) eines Ofens (6, 40) eingegeben wird, und
- wobei die Brenngutpartikel (G) in der Brennkammer (21, 41) bei einer die Erweichungstemperatur des Glasmehls überschreitenden Brenntemperatur zu den Mikrohohlkugeln (M) expandieren.

2. Verfahren nach Anspruch 1, **dadurch gekennzeichnet, dass** das Glasmehl, das zur Herstellung der Suspension verwendet wird, auf eine Feinheit von D₉₇ ≤ 47 µm, insbesondere von D₉₇ ≤ 35 µm gemahlen wird.

3. Verfahren nach Anspruch 1 oder 2, **dadurch gekennzeichnet, dass** das pulverförmige Trennmittel (T) aus Aluminiumhydroxid mit einer Feinheit von D₉₀ ≤ 35 µm, insbesondere D₉₀ ≤ 5 µm, vorzugsweise D₉₀ ≤ 3,5 µm vorliegt.

4. Verfahren nach einem der Ansprüche 1 bis 3, **dadurch gekennzeichnet, dass** das Gemenge aus Brenngutpartikeln (G) und Trennmittel (T) für eine Mischdauer von 10 Sekunden bis 10 Minuten, insbesondere für ca. 5 Minuten intensiv gemischt wird.

5. Verfahren nach einem der Ansprüche 1 bis 4, **dadurch gekennzeichnet, dass** das Gemenge aus Brenngutpartikeln (G) und Trennmittel (T) mit einem Trennmittel-Anteil von 5 Massen-% bis 25 Massen-%, insbesondere 17 Massen-% hergestellt wird.

6. Verfahren nach einem der Ansprüche 1 bis 5, **dadurch gekennzeichnet, dass** zum Mischen der Brenngutpartikel (G) mit dem Trennmittel (T) ein Intensivmischer (5) nach Eirich verwendet wird.

7. Verfahren nach einem der Ansprüche 1 bis 6, **dadurch gekennzeichnet, dass** der Expansionsprozess in einem Drehrohrofen (6) durchgeführt wird.

8. Verfahren nach einem der Ansprüche 1 bis 6, **dadurch gekennzeichnet, dass** der Expansionsprozess in einem Schachtofen (40) durchgeführt wird.

## Claims

1. A method for producing hollow microspheres (M) made of glass
- wherein an aqueous suspension of starting substances containing glass powder and water glass is prepared,
- wherein firing material particles (G), the diameter of which is between 5 micrometres and 300 micrometres, in particular between 5 micrometres and 100 micrometres, are produced from the suspension,
- wherein the firing material particles (G) are mixed with a powdered release agent (T) made of aluminium hydroxide in an intensive mixer (5), wherein
= the mixing process is carried out with a power input of at least 2 kilowatts, in particular at least 5 kilowatts, per 100 kilograms of mixing material and/or
= a mixing tool of the intensive mixer (5) moves with a circumferential speed of at least 15 metres, in particular at least 30 metres, per second during the mixing process,
- wherein the mixture of firing material particles (G) and release agent (T) is then fed into a combustion chamber (21, 41) of a kiln (6, 40), and
- wherein the firing material particles (G) in the combustion chamber (21, 41) expand to form the hollow microspheres (M) at a firing temperature which exceeds the softening temperature of the glass powder.

2. A method according to claim 1, **characterized in that** the glass powder which is used for the production of the suspension is ground to a fineness of D₉₇ ≤ 47 µm, in particular D₉₇ ≤ 35 µm.

3. A method according to claim 1 or 2, **characterized in that** the powdered release agent (T) consists of aluminium hydroxide with a fineness of D₉₀ ≤ 35 µm, in particular D₉₀ ≤ 5 µm, preferably D₉₀ ≤ 3.5 µm.

4. A method according to any one of claims 1 to 3, **characterized in that** the mixture of firing material particles (G) and release agent (T) is mixed intensively for a mixing time from 10 seconds to 10 minutes, in particular for about 5 minutes.

5. A method according to any one of claims 1 to 4, **characterized in that** the mixture of firing material particles (G) and release agent (T) is produced with a release agent proportion of from 5 mass % to 25 mass %, in particular 17 mass %.

6. A method according to any one of claims 1 to 5, **characterized in that** an intensive mixer (5) according to Eirich is used for mixing the firing material particles (G) with the release agent (T).

7. A method according to any one of claims 1 to 6, **characterized in that** the expanding is carried out in a rotary kiln (6).

8. A method according to any one of claims 1 to 6, **characterized in that** the expanding is carried out in a shaft kiln (40).

## Revendications

1. Procédé de fabrication de microsphères creuses (M) en verre
- dans lequel une suspension aqueuse de matières premières, comprenant de la poudre de verre et du verre soluble, est préparée,
- dans lequel on produit à partir de la suspension des particules de matière à brûler (G) dont le diamètre est compris entre 5 micromètres et 300 micromètres, en particulier entre 5 micromètres et 100 micromètres,
- dans lequel les particules de matière à brûler (G) sont mélangées avec un agent de séparation pulvérulent (T) en hydroxyde d'aluminium dans un mélangeur intensif (5), dans lequel
= le processus de mélange est effectué avec un apport de puissance d'au moins 2 kilowatts, en particulier d'au moins 5 kilowatts, pour 100 kilogrammes de produit mélangé et/ou
= un outil de mélange du mélangeur intensif (5) se déplace lors du processus de mélange à une vitesse périphérique d'au moins 15 mètres, en particulier d'au moins 30 mètres, par seconde,
- dans lequel ensuite le mélange de particules de matière à brûler (G) et d'agent de séparation (T) est introduit dans une chambre de combustion (21, 41) d'un four (6, 40), et
- dans lequel les particules de matière à brûler (G) se dilatent dans la chambre de combustion (21, 41) à une température de combustion dépassant la température de ramollissement de la poudre de verre pour former les microsphères creuses (M).

2. Procédé selon la revendication 1, **caractérisé en ce que** la poudre de verre utilisée pour préparer la suspension est broyée à une finesse de D₉₇ ≤ 47 µm, en particulier de D₉₇ ≤ 35 µm.

3. Procédé selon la revendication 1 ou 2, **caractérisé en ce que** l'agent de séparation pulvérulent (T) est constitué d'hydroxyde d'aluminium ayant une finesse de D₉₀ ≤ 35 µm, en particulier D₉₀ ≤ 5 µm, de préférence D₉₀ ≤ 3,5 µm.

4. Procédé selon l'une quelconque des revendications 1 à 3, **caractérisé en ce que** le mélange de particules de matière à brûler (G) et d'agent de séparation (T) est mélangé intensivement pendant une durée de mélange de 10 secondes à 10 minutes, en particulier pendant environ 5 minutes.

5. Procédé selon l'une quelconque des revendications 1 à 4, **caractérisé en ce que** le mélange de particules de matière à brûler (G) et d'agent de séparation (T) est fabriqué avec une proportion d'agent de séparation de 5 % en masse à 25 % en masse, en particulier de 17 % en masse.

6. Procédé selon l'une quelconque des revendications 1 à 5, **caractérisé en ce que** l'on utilise un mélangeur intensif (5) selon Eirich pour mélanger les particules de matière à brûler (G) avec l'agent de séparation (T).

7. Procédé selon l'une quelconque des revendications 1 à 6, **caractérisé en ce que** le processus d'expansion est réalisé dans un four rotatif (6).

8. Procédé selon l'une quelconque des revendications 1 à 6, **caractérisé en ce que** le processus d'expansion est réalisé dans un four à cuve (40).
